(19) Europäisches Patentamt / European Patent Office / Office européen des brevets

(11) **EP 3 489 145 B1**

(12) **FASCICULE DE BREVET EUROPEEN**

(45) Date de publication et mention
de la délivrance du brevet:
**14.10.2020 Bulletin 2020/42**

(51) Int Cl.:
*B64D 15/20* (2006.01)  *G01N 15/14* (2006.01)
*G01N 15/02* (2006.01)  *G01N 21/35* (2014.01)
*G01N 21/47* (2006.01)  *G01N 15/00* (2006.01)

(21) Numéro de dépôt: **18206010.3**

(22) Date de dépôt: **13.11.2018**

(54) **PROCÉDÉ DE DÉTECTION DE LA PRÉSENCE DE CRISTAUX DE GLACE DANS UN ENVIRONNEMENT**

VERFAHREN ZUM ERKENNEN DER PRÄSENZ VON EISKRISTALLEN IN EINER UMGEBUNG

METHOD FOR DETECTING THE PRESENCE OF ICE CRYSTALS IN AN ENVIRONMENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.11.2017 FR 1761297**

(43) Date de publication de la demande:
**29.05.2019 Bulletin 2019/22**

(73) Titulaire: **SAFRAN AEROTECHNICS**
**78370 Plaisir (FR)**

(72) Inventeurs:
• **BAUDOUIN, Philippe**
**78320 Lévis Saint-Nom (FR)**
• **BONNEAU, Ludovic**
**78910 Flexanville (FR)**

(74) Mandataire: **Plasseraud IP**
**66, rue de la Chaussée d'Antin**
**75440 Paris Cedex 09 (FR)**

(56) Documents cités:
**CN-A- 101 581 787      US-A- 5 285 256
US-A- 5 500 530       US-A- 6 091 335
US-A1- 2004 036 630    US-A1- 2012 193 477
US-A1- 2016 238 510**

• **MARK D. RAY ET AL: "Optical Detection of
Airborne Ice Crystals and Liquid Water Droplets",
AAIA ATMOSPHERIC AND SPACE
ENVIRONMENTS CONFERENCE, vol. AIAA
2009-3863, 22 juin 2009 (2009-06-22), - 25 juin 2009
(2009-06-25), pages 1-15, XP055166466,**

**Description**

La présente invention concerne le domaine de la détection de conditions givrantes dans un environnement, notamment par des dispositifs optiques embarqués sur des aéronefs en situation de vol dans l'atmosphère.

Lorsqu'un aéronef traverse un nuage contenant des particules d'eau à l'état liquide en surfusion, ces particules vont provoquer l'accrétion d'une couche de glace sur certaine partie de l'aéronef. Afin d'éviter qu'un tel phénomène ne se produise, il est connu du document FR 2 970 946 un procédé de détection de givre permettant de détecter de telles accrétions de glace. Toutefois, le procédé de détection décrit dans ce document ne permet pas de détecter des cristaux de glace déjà consolidés et présents dans l'atmosphère.

De tels cristaux de glace ne s'accrètent pas sur l'aéronef mais rebondissent sur celui-ci. De tels cristaux de glace déjà consolidés peuvent causer des phénomènes de givrage moteur conduisant à des pertes de puissance et/ou des phénomènes faussant des informations transmises par des sondes de vitesse, d'angle ou de température de l'avion... Il est donc essentiel de détecter de tels cristaux de glace déjà consolidés.

US 2012/193477 A1 divulgue un dispositif et un procédé de détection de glace pour aéronef comprenant un émetteur qui émet un premier rayonnement et un deuxième rayonnement dans la direction d'une surface réfléchissante, ledit premier rayonnement et ledit deuxième rayonnement étant respectivement dans une première bande de longueur d'onde et dans une deuxième bande de longueur d'onde.

La présente invention a pour but de proposer un procédé de détection de la présence de cristaux de glace dans un environnement. A cet effet, la présente invention a pour objet un procédé de détection de la présence de cristaux de glace dans un environnement mis en œuvre par un dispositif de détection en mouvement relatif par rapport au dit environnement.

Ledit procédé est défini selon la revendication 1 annexée.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

L'invention sera mieux comprise et d'autres caractéristiques et avantages apparaîtront encore à la lecture de la description détaillée qui suit, comprenant des modes de réalisation donnés uniquement à titre d'exemple illustratif en référence aux figures annexées, présentés en tant qu'exemples non limitatifs, qui pourront servir à compléter la compréhension de la présente invention et l'exposé de sa réalisation et, le cas échéant, contribuer à sa définition, et faite en se référant aux figures sur lesquelles :

- la figure 1 est une vue schématique d'un exemple de dispositif de détection de givre apte à mettre en œuvre le procédé de détection de cristaux de glace selon l'invention ;
- la figure 2 est un diagramme représentant une première partie des étapes du procédé de détection de cristaux de glace selon l'invention ;
- la figure 3 est un graphe représentant un signal de contraste en fonction du temps ;
- la figure 4 est un diagramme représentant une seconde partie des étapes du procédé de détection de cristaux de glace selon l'invention ;
- la figure 5 est un diagramme représentant les étapes d'une variante de la seconde partie du procédé de détection de cristaux de glace selon l'invention ; et
- la figure 6 présente des graphiques selon une variante de réalisation de la seconde partie du procédé selon l'invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

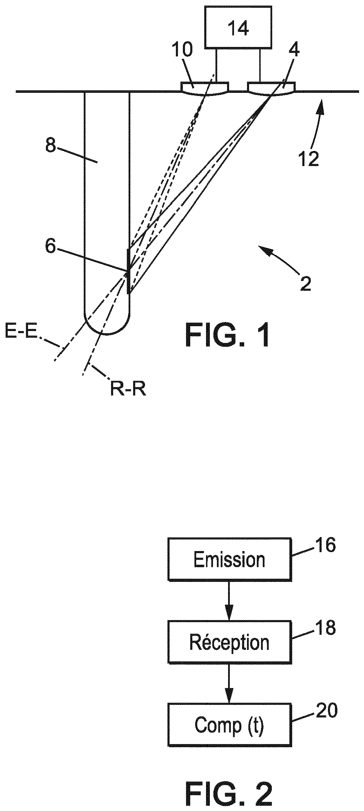

La figure 1 est une vue schématique d'un exemple de réalisation d'un dispositif de détection de givre 2. Un tel dispositif de détection de givre 2 est apte à être mis en œuvre pour réaliser le procédé de détection selon l'invention.

Plus particulièrement, le dispositif de détection de givre 2 peut être fixé sur une surface extérieure d'un aéronef telle qu'une aile, un empennage, un fuselage, une nacelle moteur, ou tout autre endroit, en particulier spécifié par un avionneur.

En référence à la figure 1, le dispositif de détection de givre 2 comporte

- un émetteur 4, avantageusement un émetteur 4 unique, ayant un axe d'émission E-E, et
- un récepteur 10 ayant un axe de réception R-R.

De plus, selon l'exemple présenté sur la figure 1, le dispositif de détection de givre 2 comporte également une protubérance 8 comprenant une surface cible 6. La surface cible 6 est apte à être du type diffusante ou réfléchissante selon la géométrie du dispositif de détection de givre 2.

Par ailleurs, le dispositif de détection de givre 2 peut également comporter au moins un moyen de filtrage optique disposé en amont du récepteur 10.

Selon une alternative de réalisation, le dispositif de détection de givre 2 peut comporter un premier moyen de filtrage optique disposé en amont d'une première partie du récepteur 10 et/ou un deuxième moyen de filtrage optique disposé en amont d'une deuxième partie du récepteur 10, préférentiellement distincte de la première partie du récepteur 10.

A titre d'exemple, le moyen de filtrage optique est un filtre passe-bande. Alternativement, le dispositif de détection de givre 2 peut comporter un premier filtre passe-bas disposé en amont d'une première partie du récepteur 10 et/ou un deuxième filtre passe-bande disposé en amont d'une deuxième partie du récepteur 10 distincte de la première partie du récepteur 10.

Sur la figure 1, le moyen de filtrage, notamment le premier filtre passe-bas et le deuxième filtre passe-bande, n'est pas représenté.

L'émetteur 4 est apte à émettre un rayonnement optique, ayant de préférence une longueur d'onde comprise entre 1,1 $\mu$m et 1,7 $\mu$m.

Selon un mode de réalisation particulier, l'axe de réception R-R du récepteur 10 croise l'axe d'émission E-E de l'émetteur 4. Notamment, l'axe d'émission E-E de l'émetteur 4 croise l'axe de réception R-R du récepteur 10 sensiblement dans le plan défini par la surface cible 6.

La protubérance 8, aussi appelée sonde, présente de préférence un profil aérodynamique. Un tel profil aérodynamique est notamment défini par le comité consultatif national pour l'aéronautique généralement, également dénommé NACA, acronyme de l'anglais "National Advisory Commitee for Aeronautics".

En particulier, dans le mode de réalisation illustré sur la figure 1, la protubérance 8 présente une forme cylindrique qui s'étend perpendiculairement à une surface externe 12 de l'aéronef.

De plus, la surface cible 6 est apte à permettre une réflexion ou une diffusion, selon la géométrie du dispositif de détection de givre 2, d'au moins une partie du rayonnement optique émis par l'émetteur 4.

Le récepteur 10 est apte à capter au moins une partie du rayonnement optique diffusé ou réfléchi par la surface cible 6.

Le premier moyen de filtrage est apte à filtrer un rayonnement optique dans une première bande de longueurs d'onde $\lambda_1$, en particulier comprise entre 1,3 $\mu$m et 1,45 $\mu$m, notamment comprise entre 1,4 $\mu$m et 1,45 $\mu$m, en particulier égale à 1,42 $\mu$m.

Le deuxième moyen de filtrage est apte à filtrer un rayonnement optique dans une deuxième bande de longueurs d'onde $\lambda_2$, en particulier comprise entre 1,5 $\mu$m et 1,7 $\mu$m, notamment comprise entre 1,5 $\mu$m et 1,6 $\mu$m, en particulier égale 1,55 $\mu$m.

Les propriétés de transmission des bandes de longueurs d'onde $\lambda 1$ et $\lambda 2$ à travers la glace et/ou à travers l'eau liquide sont différentes.

Les propriétés des bandes de longueurs d'onde $\lambda 1$ et $\lambda 2$ permettent, notamment en comparant les intensités du rayonnement optique capté dans la première bande de longueur d'onde $\lambda 1$ et dans la deuxième bande de longueurs d'onde $\lambda 2$, de discriminer la présence de glace de la présence d'eau liquide sur un trajet optique du rayonnement.

Le dispositif de détection 2 comporte, en outre, un calculateur 14. Plus spécifiquement, le calculateur 14 est apte à mesurer au moins :

- une première variation $R_{\lambda 1}(t)$, au cours du temps, de l'intensité du rayonnement optique dans la première bande de longueurs d'onde $\lambda_1$, capté notamment par la première partie du récepteur 10, et
- une deuxième variation $R_{\lambda 2}(t)$, au cours du temps, de l'intensité du rayonnement optique dans la deuxième bande de longueurs d'onde $\lambda_2$, capté notamment par la deuxième partie du récepteur 10.

Avantageusement, selon la présente i divulgation, afin de comparer les variations au cours du temps de la première variation $R_{\lambda 1}(t)$ et de la deuxième variation $H_{\lambda 2}(t)$, un signal de comparaison Comp(t) est calculé. Ce signal de comparaison Comp(t) peut en particulier être un contraste entre la première variation $R_{\lambda 1}(t)$ et la deuxième variation $R_{\lambda 2}(t)$. Ce contraste est défini selon la formule :

$$Comp(t) = \frac{R_{\lambda 2}(t) - R_{\lambda 1}(t)}{R_{\lambda 2}(t) + R_{\lambda 1}(t)}$$

Selon la présente divulgation, a variation du signal de comparaison Comp(t) au cours du temps calculée par le calculateur 14 est utilisée pour déterminer et/ou déduire la présence et/ou l'absence de glace dans un environnement, tel que notamment l'atmosphère.

Selon un exemple particulier de réalisation, le signal de comparaison Comp(t) est un signal de contraste Comp(t) représentatif d'une variation du contraste du rayonnement en fonction du temps.

Particulièrement, à cet effet, le calculateur 14 est interfacé à l'émetteur 4 et au récepteur 10.

Selon une première variante, l'émetteur 4 du dispositif de détection 2 comprend deux lasers d'émission. Un premier laser est propre à émettre un rayonnement optique dans la première bande de longueurs d'onde $\lambda_1$ et un deuxième laser est propre à émettre dans la deuxième bande de longueurs d'onde $\lambda_2$. Le premier laser et le deuxième laser sont, par exemple, placés à l'intérieur d'un fuselage d'un aéronef et pointent vers l'extérieur à travers un hublot. Dans ce mode de réalisation, le dispositif ne comporte plus de premier et de deuxième moyens de filtrage optique des bandes de longueur d'onde $\lambda_1$ et $\lambda_2$. Ainsi agencés, Le premier laser et le deuxième laser éclairent une surface cible exposée au flux relatif de l'atmosphère.

Selon une deuxième variante, le dispositif de détection 2 ne comprend pas de protubérance 8. Dans une telle configuration, la surface cible 6 est aménagée directement sur une surface extérieure de l'aéronef.

Selon une troisième variante, l'émetteur 4 et le récepteur 10 du dispositif de détection 2 sont disposés en vis-à-vis et à distance l'un de l'autre. Dans un tel agencement, le dispositif de détection 2 est propre à détecter les cristaux de glace passant entre l'émetteur 4 et le récepteur 10. Dans ce cas, l'axe d'émission E-E et l'axe de réception R-R sont avantageusement confondus. Ils se croisent donc en une multiplicité de points.

On se réfère dorénavant à la figure 2 qui est un diagramme représentant une première partie des étapes du procédé de détection de cristaux de glace selon l'invention.

Le procédé de détection comprend une première étape 16, dite étape d'émission 16, au cours de laquelle l'émetteur 4, notamment sous la commande du calculateur 14, émet un rayonnement optique, en direction de la surface cible 6. Le rayonnement optique émis est, selon le mode de réalisation de la figure 1, diffusé ou réfléchi par la surface cible 6.

Puis, toute ou partie de ce rayonnement traverse le premier moyen de filtrage et/ou tout ou partie de ce rayonnement traverse le deuxième moyen de filtrage. Selon une variante de réalisation, une première partie de ce rayonnement traverse le premier moyen de filtrage et une autre partie de ce rayonnement traverse le deuxième moyen de filtrage.

Par suite, le procédé de détection comprend une deuxième étape 18, dite étape de réception 18, au cours de laquelle le rayonnement optique, notamment diffusé ou réfléchi par la surface cible 6, est reçu par le récepteur 10.

Suite à la réception du rayonnement optique, en particulier le rayonnement diffusé ou réfléchi, le procédé de détection comprend une étape complémentaire, dite étape d'identification, au cours de laquelle le dispositif de détection de givre 2 filtre le rayonnement optique reçu selon des bandes de longueurs d'ondes définies, notamment selon la première bande de longueurs d'onde $\lambda_1$ et la deuxième bande de longueurs d'onde $\lambda_2$.

Par suite, le procédé de détection comprend une étape additionnelle, dite étape d'envoi, au cours de laquelle le récepteur 10 transmet au calculateur 14 la variation au cours du temps d'un paramètre caractéristique du rayonnement optique, telle que l'intensité du rayonnement, dans les bandes de longueurs d'ondes définies à l'étape d'identification, notamment la première variation $R_{\lambda 1}(t)$ au cours du temps de l'intensité du rayonnement dans la première bande de longueurs d'onde $\lambda_1$ ainsi que la deuxième variation $R_{\lambda 2}(t)$ au cours du temps de l'intensité du rayonnement dans la deuxième bande de longueurs d'onde $\lambda_2$.

Suite à l'étape d'envoi, le procédé de détection comprend une étape supplémentaire 20, dite étape de calcul 20, au cours de laquelle le calculateur 14 calcule la variation du signal de comparaison Comp(t) au cours du temps.

La présence des cristaux de glace dans l'environnement, en particulier l'atmosphère, traversé par le rayonnement optique émis et/ou réfléchi et/ou diffusé et reçu par le récepteur 10, génère une variation au cours du temps de l'intensité de rayonnement, notamment la première variation $R_{\lambda 1}(t)$ au cours du temps de l'intensité du rayonnement dans la première bande de longueurs d'onde $\lambda_1$, et/ou la deuxième variation $R_{\lambda 2}(t)$ au cours du temps de l'intensité du rayonnement dans la deuxième bande de longueurs d'onde $\lambda_2$, présentant de grandes et brusques variations d'amplitude.

Une mesure comparative de la variation d'intensité du rayonnement optique, avantageusement respectivement de la première variation $R_{\lambda 1}(t)$ et la deuxième variation $R_{\lambda 2}(t)$, permet alors de détecter la présence des cristaux de glace dans l'environnement, en particulier des cristaux de glace qui interceptent le rayonnement émis et/ou diffusé et/ou réfléchi. De même, selon la présente invention, il est également possible de détecter la présence des cristaux de glace qui heurtent la surface cible 6.

En particulier, la mesure comparative peut être avantageusement réalisée en calculant :

- le signal de comparaison Comp(t) en fonction du temps et
- le bruit B du signal de comparaison Comp(t).

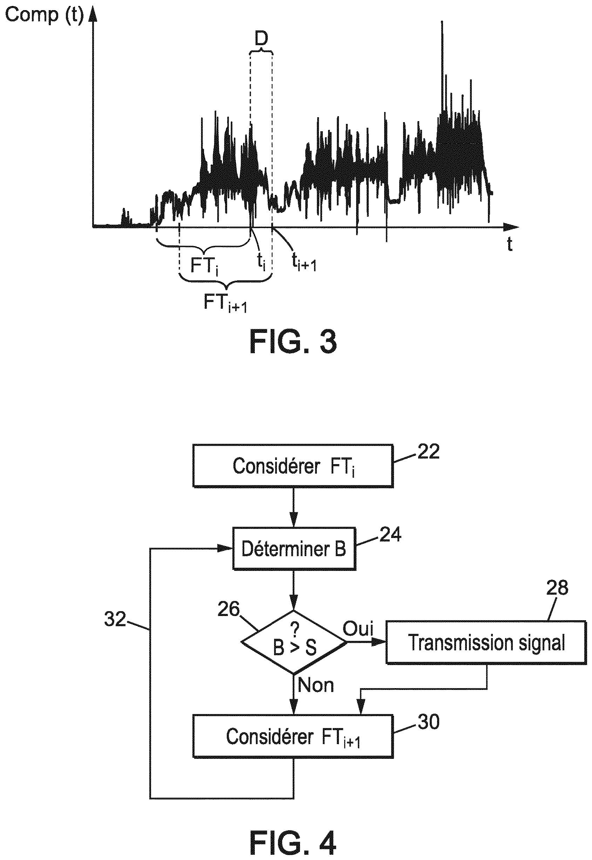

La figure 3 est un exemple d'une courbe représentative du signal de comparaison Comp(t) en fonction du temps dans le cas où le signal de comparaison Comp(t) est le signal de contraste Comp(t). Comme visible sur cette figure, le signal de contraste Comp(t) est particulièrement "agité" en présence de cristaux de glace.

A cet effet, les étapes précédemment décrites, à savoir l'étape d'émission 16, l'étape de réception 18, l'étape d'identification, l'étape d'envoi et l'étape de calcul 20 se poursuivent au cours du temps, en particulier pendant toute la durée du vol.

Par suite, l'invention prévoit des étapes complémentaires 22 à 30 du procédé de détection selon l'invention permettant de détecter la présence des cristaux de glace dans l'environnement.

Selon la nature du rayonnement optique émis par l'émetteur 10, les étapes complémentaires 22 à 30 traitent des données discrètes ou continues.

Ainsi, si l'émetteur 10 émet un rayonnement optique pulsé à une fréquence prédéfinie, un point du signal de comparaison Comp(t) est obtenu après la réception du rayonnement pour chaque impulsion émise. Le signal de comparaison Comp(t) obtenu après la réception du rayonnement est discret. Les points du signal de comparaison Comp(t) sont alors traités lors des étapes 22 à 30 du procédé de détection selon l'invention.

Si l'émetteur émet un rayonnement optique en continu, le signal de comparaison Comp(t) obtenu après la réception du rayonnement est continu. Dans ce cas également, le signal de comparaison Comp(t) est alors traité lors des étapes 22 à 30 du procédé de détection selon l'invention.

La figure 4 présente un diagramme détaillant les étapes complémentaires 22 à 30, en tant que seconde partie des étapes du procédé de détection de cristaux de glace selon l'invention.

Plus spécifiquement, au cours d'une étape 22, dite étape d'échantillonnage 22, à un temps $t_i$, le calcu-

lateur 14 considère un échantillon du signal de comparaison Comp(t). L'échantillon est compris dans une fenêtre temporelle $FT_i$. comportant :

- dans le cas d'un signal de comparaison Comp(t) discret, un certain nombre de points du signal de comparaison Comp(t) immédiatement calculés avant le temps $t_i$, et
- dans le cas d'un signal de comparaison Comp(t) continu, une portion de signal de comparaison Comp(t) immédiatement calculé avant le temps $t_i$.

Au cours d'une étape 24, dite étape de calcul du bruit 24, le calculateur 14 calcule le bruit B du signal de comparaison Comp(t) pour la fenêtre temporelle $FT_i$ considérée.

Selon un mode particulier, préférentiellement, le bruit B du signal de comparaison Comp(t) est égal à la valeur de l'écart-type $\sigma$ du signal de comparaison Comp(t).

Au cours d'une étape 26, dite étape de seuillage 26, le bruit B est comparé à un seuil défini S. Alors,

- si le bruit B est supérieur au seuil S, le calculateur 14 transmet un signal de détection de présence de cristaux de glace dans l'environnement, tel que l'atmosphère, au cours d'une étape 28, dite étape de communication 28, en particulier vers le poste de pilotage, et
- si le bruit B est inférieur au seuil S, une étape 30, dite étape de poursuite 30, est réalisée au cours de laquelle, au temps $t_{i+1}$, une nouvelle fenêtre temporelle suivante $FT_{i+1}$ est considérée afin de réitérer le calcul du bruit B du signal de comparaison Comp(t) et le calculateur 14 considère le signal de comparaison Comp(t), discret ou continu, dans la fenêtre temporelle suivante $FT_{i+1}$, succédant à la fenêtre temporelle $FT_i$.

L'étape 28 de communication est une étape de détection de la présence de cristaux de givre.

De même, optionnellement, l'étape de poursuite 30 peut être enclenchée après avoir transmis le signal de détection à l'étape de communication 28.

Avantageusement, la fenêtre temporelle suivante $FT_{i+1}$ présente la même durée que la fenêtre temporelle $FT_i$. La fenêtre temporelle suivante $FT_{i+1}$ est décalée dans le temps d'une durée D. De préférence, la durée de décalage D est inférieure à la durée d'une fenêtre temporelle.

La fenêtre temporelle suivante $FT_{i+1}$ comporte un certain nombre de points ou une portion du signal de comparaison Comp(t) calculé immédiatement avant le temps $t_{i+1}$.

Au cours d'une étape suivante 32, également dite étape de bouclage 32, le procédé retourne à l'étape de calcul du bruit 24 au cours de laquelle le calculateur 14 détermine le bruit B dans la fenêtre temporelle suivante $FT_{i+1}$.

Préférentiellement, l'étape de calcul du bruit 24, l'étape de seuillage 26, l'étape de communication 28, l'étape de poursuite 30 et l'étape de bouclage 32 sont répétés sur le signal de comparaison Comp(t) au cours du temps pendant toute ou partie de la durée du vol. Avantageusement, le procédé de détection selon l'invention est mis en œuvre en permanence pendant toute la durée du vol

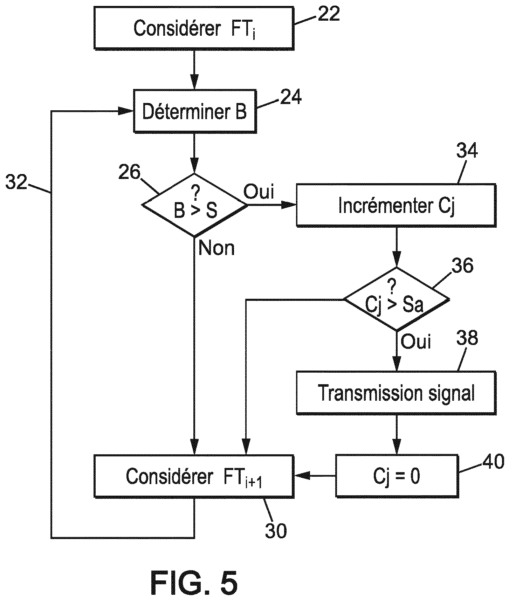

On se réfère dorénavant à la figure 5 qui représente une variante de la seconde partie du procédé de détection selon l'invention. Dans cette variante, l'étape de calcul du bruit 24, l'étape de seuillage 26, l'étape de poursuite 30 et l'étape de bouclage 32 sont identiques à l'étape de calcul du bruit 24, l'étape de seuillage 26, l'étape de poursuite 30 et l'étape de bouclage 32 du procédé de détection décrit en liaison avec la figure 4 et ne seront pas décrites une nouvelle fois.

Si au cours de l'étape de seuillage 26, le bruit B est supérieur au seuil S, alors le calculateur 14 incrémente une valeur Cj d'un compteur, au cours d'une étape 34, dite étape d'incrémentation 34.

Par suite, au cours d'une étape 36, dite étape de confirmation 36, la valeur Cj du compteur est comparée à un seuil de déclenchement Sa. Alors,

- si la valeur Cj est supérieure au seuil de déclenchement Sa, le calculateur 14 transmet un signal de détection de présence de cristaux de glace dans l'environnement, tel que l'atmosphère, au cours d'une étape 38, dite étape de communication 38, en particulier vers le poste de pilotage, et en complément, le calculateur 14 peut initialiser la valeur Cj du compteur à zéro au cours d'une étape 40, dite étape de réinitialisation 40, et
- si la valeur Cj est inférieure au seuil de déclenchement Sa, l'étape de poursuite 30 est réalisée au cours de laquelle une nouvelle fenêtre temporelle suivante $FT_{i+1}$ est considérée afin de réitérer le calcul du bruit B du signal de comparaison Comp(t).

Dans ce mode de réalisation, l'étape 38 de communication est une étape de détection de la présence de cristaux de givre.

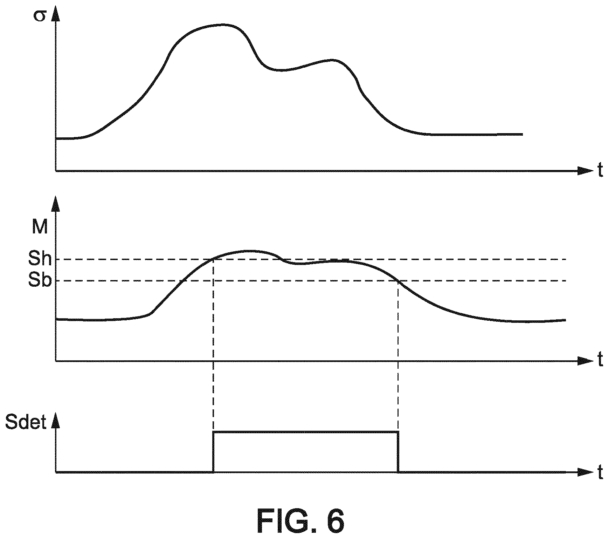

La figure 6 présente des graphiques selon une autre variante de réalisation de la seconde partie du procédé selon l'invention. Dans une telle configuration, l'étape de seuillage 26 comporte en outre une étape de calcul de la moyenne du bruit calculé précédemment, notamment à partir de plusieurs valeurs du bruit B calculées, et une étape de comparaison de la moyenne calculée à un seuil bas Sb et à un seuil haut Sh.

Alors, si la moyenne calculée dépasse le seuil haut Sh, le calculateur 14 transmet le signal de détection de présence de cristaux de glace dans l'atmosphère au cours de l'étape de communication 28 ou 38, en particulier vers le poste de pilotage.

Optionnellement, en complément, si le signal de détection de présence de cristaux de glace dans l'environnement, tel que l'atmosphère, est transmis, le calculateur 14 ne cesse de communiquer le signal de détection de présence de cristaux de glace dans l'environnement, tant que la moyenne calculée à chaque itération ne devient pas inférieure au seuil bas Sb.

Selon une autre variante, le bruit B est calculé à partir du calcul de la transformée de Fourrier du signal de comparaison Comp(t) dans la fenêtre temporelle $FT_i$.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

Le rayonnement émis comprend des rayons appartenant à une première bande de longueurs d'onde $\lambda_1$ et des rayons appartenant à une deuxième bande de longueurs d'onde $\lambda_2$.

Le dispositif de détection 2 est en mouvement relatif par rapport à l'environnement. Ce mouvement relatif peut résulter du mouvement de l'aéronef par rapport à son environnement, par exemple lorsque l'aéronef est en plein vol ou résulter du mouvement du vent par rapport à un aéronef stationné sur le tarmac ou du mouvement de l'air propulsé par une hélice d'un avion ou d'un hélicoptère ou du mouvement de l'air aspiré par une entrée d'air.

En résumé, l'invention concerne un procédé de détection de la présence de cristaux de givre dans l'atmosphère pour aéronef. Le procédé est mis en œuvre par un dispositif de détection 2 comprenant au moins un émetteur 4 ayant un axe d'émission E-E, un récepteur 10 ayant un axe de réception R-R croisant l'axe d'émission E-E en au moins un point, et un calculateur 14 connecté à l'émetteur 4 et au récepteur 10. Ledit procédé est défini selon la revendication 1 annexée.

L'étape de détermination comprend une étape de calcul d'un écart type du signal de contraste dans la fenêtre temporelle considérée.

En variante, l'étape de détermination comprend une étape de calcul de la transformée de Fourrier du signal de contraste dans la fenêtre temporelle considérée.

En variante non comprise dans l'invention, l'étape de répétition comporte en outre les étapes suivantes :

- lorsque le bruit B est supérieur audit seuil défini S, incrémenter 34 une valeur Cj d'un compteur,
- comparer 36 la valeur Cj du compteur à un seuil d'alerte Sa,
- lorsque la valeur Cj du compteur est supérieure au seuil d'alerte Sa, transmettre 38 un signal de détection de la présence de cristaux de givre, et initialiser 40 la valeur Cj du compteur à zéro

- lorsque la valeur Cj du compteur est inférieure au seuil d'alerte Sa, reprendre l'étape de détermination 24 en considérant la fenêtre temporelle suivante.

En variante non comprise dans l'invention, la durée D de décalage est inférieure à la durée de la fenêtre temporelle.

En variante non comprise dans l'invention, a première bande de longueurs d'onde $\lambda_1$ est comprise entre 1,5 $\mu$m et 1,7 $\mu$m, notamment comprise entre 1,5 $\mu$m et 1,6 $\mu$m, en particulier égale 1,55 $\mu$m et la deuxième bande de longueurs d'onde $\lambda_2$ est comprise entre 1,3 $\mu$m et 1,45 $\mu$m, notamment comprise entre 1,4 $\mu$m et 1,45 $\mu$m, en particulier égale à 1,42 $\mu$m.

En variante non comprise dans l'invention, le signal de comparaison est égal à $\dfrac{1}{comp(t)}$ ou est égal à K x Comp(t) dans laquelle K est un nombre réel.

En variante non comprise dans l'invention, le signal de comparaison (Comp(t)) est représentatif de la variation du contraste ou de la variation de tout autre signal permettant de comparer les intensités des rayonnements optiques $R_{\lambda 1}(t)$ et $R_{\lambda 2}(t)$.

## Revendications

1. Procédé de détection de la présence de cristaux de glace dans un environnement mis en œuvre par un dispositif de détection (2) en mouvement relatif par rapport au dit environnement, ledit procédé comprenant au moins :

　　- une étape d'émission (16) dans laquelle au moins un rayonnement optique est émis par le dispositif de détection (2) dans l'environnement;
　　- une étape de réception (18) dans laquelle au moins une partie du rayonnement optique émis est reçu par le dispositif de détection (2), ladite au moins partie de rayonnement réceptionnée comportant des rayons appartenant à une première bande de longueurs d'onde ($\lambda_1$) et des rayons appartenant à une deuxième bande de longueurs d'onde ($\lambda_2$) ; dans lequel e procédé de détection comporte en outre au moins :

　　- une étape de calcul (20), dans laquelle le dispositif de détection (2) calcule un signal de comparaison (Comp(t)) représentatif du contraste, ledit contraste étant obtenu à partir de la formule ci-dessous :

$$Comp(t) = \frac{R_{\lambda 2}(t) - R_{\lambda 1}(t)}{R_{\lambda 2}(t) + R_{\lambda 1}(t)}$$

　　dans laquelle $P_{\lambda 1}(t)$ est l'intensité au cours du temps t des rayons appartenant à la première bande de longueurs d'onde ($\lambda_1$) et $R_{\lambda 2}(t)$ est l'intensité au cours du temps des rayons appartenant à la deuxième bande de longueurs d'onde ($\lambda_2$),et

a) une étape de calcul d'un écart type ($\sigma$) du signal de comparaison Comp(t) (24), dans laquelle l'écart type ($\sigma$) du signal de comparaison (Comp(t)) est calculé,
b) une étape de seuillage (26), dans laquelle l'écart type ($\sigma$)est comparé à un seuil défini (S).
c) une étape de communication (28), dans laquelle un signal de détection de présence de cristaux de glace dans l'environnement est transmis lorsque l'écart type ($\sigma$) est supérieur au seuil défini (S).

2. Procédé de détection selon la revendication 1, dans lequel le procédé de détection comporte également au moins :

- une étape d'échantillonnage (22), dans laquelle une fenêtre temporelle (FTi) est définie.

3. Procédé de détection selon la revendication 1, dans lequel le procédé de détection comporte également au moins :

- une étape de poursuite (30), dans laquelle une fenêtre temporelle suivante (FTi+1) décalée dans le temps d'une durée (D) par rapport à la fenêtre temporelle (FTi) est considérée, et/ou
- une étape de bouclage (32), dans laquelle l'étape de calcul l'écart type ($\sigma$) et l'étape de seuillage (26) sont répétées

4. Procédé de détection selon la revendication 3, dans lequel la durée (D) de décalage est inférieure à la durée de la fenêtre temporelle.

5. Procédé de détection selon la revendication 3 ou 4, dans lequel le procédé de détection comporte également au moins :

- une étape d'incrémentation (34), dans laquelle une valeur (Cj) d'un compteur est incrémentée lorsque l'écart type ($\sigma$) est supérieur au seuil défini (S), et/ou
- une étape de confirmation (36), dans laquelle la valeur (Cj) du compteur est comparée à un seuil de déclenchement (Sa).

6. Procédé de détection selon la revendication 5, dans lequel le procédé de détection comporte également au moins :

- une étape de communication (38), dans laquelle un signal de détection de la présence de cristaux de glace dans l'environnement est transmis, lorsque la valeur (Cj) du compteur est supérieure au seuil de déclenchement (Sa).

7. Procédé de détection selon la revendication 6, dans lequel le procédé de détection comporte également au moins :

- une étape de réinitialisation (40), dans laquelle la valeur (Cj) du compteur est initialisée à zéro.

8. Procédé de détection selon l'une quelconque des revendications 1 à 7, dans lequel l'étape de calcul l'écart type ($\sigma$) comprend une étape de calcul d'un écart type du signal de comparaison (Comp(t)) dans la fenêtre temporelle considérée.

9. Procédé de détection selon l'une quelconque des revendications 1 à 8, dans lequel l'étape de calcul l'écart type ($\sigma$) comprend une étape de calcul de la transformée de Fourrier du signal de comparaison dans la fenêtre temporelle considérée.

**Patentansprüche**

1. Detektionsverfahren für das Vorliegen von Eiskristallen in einer Umgebung, das von einer Detektionsvorrichtung (2) in Relativbewegung in Bezug auf die Umgebung durchgeführt wird, wobei das Verfahren wenigstens umfasst:

- einen Emissionsschritt (16), in dem wenigstens eine optische Strahlung von der Detektionsvorrichtung (2) in die Umgebung emittiert wird;
- einen Empfangsschritt (18), in dem wenigstens ein Teil der emittierten optischen Strahlung von der Detektionsvorrichtung (2) empfangen wird, wobei der wenigstens eine empfangene Teil der Strahlung Strahlen umfasst, die zu einem ersten Wellenlängenband ($\lambda_1$) gehören, und Strahlen, die zu einem zweiten Wellenlängenband ($\lambda_2$) gehören; wobei das Detektionsverfahren ferner wenigstens umfasst:
- einen Berechnungsschritt (20), in dem die Detektionsvorrichtung (2) ein Vergleichssignal (Comp(t)) berechnet, das für den Kontrast repräsentativ ist, wobei der Kontrast ausgehend von der folgenden Formel erhalten wird:

$$Comp(t) = \frac{R_{\lambda 2}(t) - R_{\lambda 1}(t)}{R_{\lambda 2}(t) + R_{\lambda 1}(t)}$$

wobei $H_{\lambda 1}(t)$ die Intensität der zum ersten Wellenlängenband ($\lambda_1$) gehörenden Strahlen im Verlauf der Zeit ist und $R_{\lambda 2}(t)$ die Intensität der zum zweiten Wellenlängenband ($\lambda_2$) gehörenden Strahlen im Verlauf der Zeit ist, und

    a) einen Berechnungsschritt für eine Standardabweichung ($\sigma$) des Vergleichssignals (Comp(t)) (24), in dem die Standardabweichung ($\sigma$) des Vergleichssignals (Comp(t)) berechnet wird,
    b) einen Schwellenwertschritt (26), in dem die Standardabweichung ($\sigma$) mit einem definierten Schwellenwert (S) verglichen wird,
    c) einen Kommunikationsschritt (28), in dem ein Detektionssignal für das Vorliegen von Eiskristallen in der Umgebung übertragen wird, wenn die Standardabweichung ($\sigma$) größer als der definierte Schwellenwert (S) ist.

2. Detektionsverfahren nach Anspruch 1, wobei das Detektionsverfahren weiter wenigstens umfasst:

    - einen Probenahmeschritt (22), in dem ein Zeitfenster (FTi) definiert wird.

3. Detektionsverfahren nach Anspruch 1, wobei das Detektionsverfahren weiter wenigstens umfasst:

    - einen Folgeschritt (30), in dem ein folgendes Zeitfenster (FTi +1) betrachtet wird, das zeitlich um eine Dauer (D) relativ zum Zeitfenster (FTi) versetzt ist, oder/und
    - einen Schleifenschritt (32), in dem der Berechnungsschritt für die Standardabweichung ($\sigma$) und der Schwellenwertschritt (26) wiederholt werden.

4. Detektionsverfahren nach Anspruch 3, wobei die Dauer (D) des Versatzes geringer ist als die Dauer des Zeitfensters.

5. Detektionsverfahren nach Anspruch 3 oder 4, wobei das Detektionsverfahren weiter wenigstens umfasst:

    - einen Inkrementierungsschritt (34), in dem ein Wert (Cj) eines Zählers inkrementiert wird, wenn die Standardabweichung ($\sigma$) größer als der definierte Schwellenwert (S) ist, oder/und
    - einen Bestätigungsschritt (36), in dem der Wert (Cj) des Zählers mit einer Auslöseschwelle (Sa) verglichen wird.

6. Detektionsverfahren nach Anspruch 5, wobei das Detektionsverfahren weiter wenigstens umfasst:

    - einen Kommunikationsschritt (38), in dem ein Detektionssignal für das Vorliegen von Eiskristallen in der Umgebung übertragen wird, wenn der Wert (Cj) des Zählers größer als die Auslöseschwelle (Sa) ist.

7. Detektionsverfahren nach Anspruch 6, wobei das Detektionsverfahren weiter wenigstens umfasst:

    - einen Reinitialisierungsschritt (40), in dem der Wert (Cj) des Zählers auf Null initialisiert wird.

8. Detektionsverfahren nach einem der Ansprüche 1 bis 7, wobei der Berechnungsschritt für die Standardabweichung ($\sigma$) einen Berechnungsschritt für eine Standardabweichung des Vergleichssignals (Comp(t)) im betrachteten Zeitfenster umfasst.

9. Detektionsverfahren nach einem der Ansprüche 1 bis 8, wobei der Berechnungsschritt für die Standardabweichung ($\sigma$) einen Schritt zum Berechnen der Fourier-Transformierten des Vergleichssignals in dem betrachteten Zeitfenster umfasst.

## Claims

1. Method for detecting the presence of ice crystals in an environment, implemented by a detection device (2) in relative motion with respect to said environment, said method comprising at least:

    - an emission step (16), in which at least one optical radiation is emitted by the detection device (2) into the environment;
    - a reception step (18), in which at least a portion of the emitted optical radiation is received by the detection device (2), said at least a portion of the received radiation including rays within a first wavelength band ($\lambda_1$) and rays within a second wavelength band ($\lambda_2$);

wherein the detection method further comprises at least:

    - a calculation step (20), in which the detection device (2) calculates a comparison signal (Comp(t)) representative of the contrast, said contrast being obtained from the following formula:

$$Comp(t) = \frac{R_{\lambda 2}(t) - R_{\lambda 1}(t)}{R_{\lambda 2}(t) + R_{\lambda 1}(t)}$$

where $R_{\lambda 1}(t)$ is the intensity over time t of the rays within the first wavelength band ($\lambda_1$) and $R_{\lambda 2}(t)$ is the intensity over time of the rays within the second wavelength band ($\lambda_2$), and

- a) a standard deviation calculation step (24), in which a standard deviation ($\sigma$) of the comparison signal (Comp(t)) is calculated,
- b) a thresholding step (26), in which the standard deviation ($\sigma$) is compared to a defined threshold (S),
- c) a communication step (28), in which a signal indicating detection of the presence of ice crystals in the environment is transmitted when the standard deviation ($\sigma$) is greater than the defined threshold (S).

2. Detection method according to claim 1, wherein the detection method further comprises at least:

- a sampling step (22), in which a time window (FTi) is defined.

3. Detecton method according to claim 1, wherein the detection method further comprises at least:

- a continuation step (30), in which a next time window (FTi+1) shifted in time by a duration (D) with respect to time window (FTi) is considered, and/or
- a loop step (32), in which the standard deviation calculation step (24) and the thresholding step (26) are repeated.

4. Detection method according to claim 3, wherein the shift duration (D) is less than the duration of the time window.

5. Detection method according to claim 3 or 4, wherein the detection method further comprises at least:

- an incrementing step (34), in which a value (Cj) of a counter is incremented when the standard deviation ($\sigma$) is greater than the defined threshold (S), and/or
- a confirmation step (36), in which the value (Cj) of the counter is compared to a triggering threshold (Sa).

6. Detection method according to claim 5, wherein the detection method further comprises at least a communication step (28), in which a signal indicating detection of the presence of ice crystals in the environment is transmitted when the the value (Cj) of the counter is greater to the triggering threshold (Sa).

7. Detection method according to claim 6, wherein the detection method further comprises at least:

- a reset step (40), in which the counter value (Cj) is initialized to zero.

8. Detection method according to any one of claims 1 to 7, wherein the standard deviation ($\sigma$) calculation step (24) comprises a step of calculating a standard deviation of the comparison signal (Comp(t)) in the time window considered.

9. Detection method according to any one of claims 1 to 8, wherein the standard deviation ($\sigma$) calculation step (24) comprises a step of calculating the Fourier transform of the comparison signal in the time window considered.

EP 3 489 145 B1

14

10　　　　　4

8

6

E-E.

R-R

12

2

**FIG. 1**

Emission — 16

Réception — 18

Comp (t) — 20

**FIG. 2**

10

FIG. 3

FIG. 4

Considérer $FT_i$ —22

Déterminer B —24

32

26

? B > S —— Oui —— Incrémenter Cj —34

Non

? Cj > Sa —36

Oui

Transmission signal —38

Considérer $FT_{i+1}$ ◄—— Cj = 0 —40

30

**FIG. 5**

FIG. 6

**EP 3 489 145 B1**

## RÉFÉRENCES CITÉES DANS LA DESCRIPTION

**Documents brevets cités dans la description**

- FR 2970946

- US 2012193477 A1